# FASCICULE DE BREVET EUROPEEN

(11) **EP 3 588 971 B1**
(45) Date de publication et mention de la délivrance du brevet: **24.02.2021**
(21) Numéro de dépôt: 19180743.7
(22) Date de dépôt: 18.06.2019
(51) Int. Cl.: H04Q 9/00, H04B 3/54, H04L 12/66, H04W 88/16

(54) **PROCÉDÉ PERMETTANT DE TRANSPORTER DES TRAMES LORA SUR UN RÉSEAU CPL**
VERFAHREN ZUM TRANSPORTIEREN VON LORA FRAMES IN EIN CPL-NETZWERK
METHOD FOR TRANSMITTING LORA FRAMES OVER A PLC NETWORK

(30) Priorité: 28.06.2018 FR 1855822
(43) Date de publication de la demande: 01.01.2020
(73) Titulaire: Sagemcom Energy & Telecom SAS, 92500 Rueil-Malmaison (FR)
(72) Inventeur: TEBOULLE, Henri, 92500 Rueil Malmaison (FR); LE GOURRIEREC, Marc, 92500 Rueil Malmaison (FR)
(74) Mandataire: Cabinet Le Guen Maillet

(56) Documents cités:
- EP-A1- 3 122 061
- WO-A1-2018/046686

## Description

La présente invention concerne un procédé permettant de faire transporter des trames émises par des terminaux sur un réseau de type LPWAN par un réseau de communication par courants porteurs en ligne d'un système de gestion automatique de relevés de compteurs électriques, un dispositif et un système mettant en œuvre le procédé.

Avec l'apparition récente de l'internet des objets (« Internet of Things (IoT) » en terminologie anglo-saxonne) est apparu un nouveau type de réseaux : les réseaux sans fils à grande portée et à faible consommation d'énergie (« Low Power Wide Area Network (LPWAN) », en terminologie anglo-saxonne). Parmi ces réseaux LPWAN, on peut citer des réseaux basés sur la technologie LoRa (marque déposée) (« Long Range» en terminologie anglo-saxonne) et les réseaux de la société Sigfox.

Un réseau basé sur la technologie LoRa (appelé « réseau LoRa » par la suite) utilise un protocole appelé LoRaWAN. Un réseau LoRa est composé de stations de base ou passerelles (« gateways » en terminologie anglo-saxonne) généralement placées sur des points hauts afin de couvrir une grande zone géographique. Les passerelles, appelées *passerelles LoRa* par la suite, sont aptes à détecter des messages émis dans leur zone par des équipements ou terminaux (« endpoints » en terminologie anglo-saxonne) et à les remonter vers au moins un serveur (« LoRa Network Server (LNS) » en terminologie anglo-saxonne), appelé serveur LNS par la suite, qui les traitera.

Dans un fonctionnement classique d'un réseau LoRa, un terminal désirant transmettre un message (*i.e*. des données) au serveur LNS, transmet ce message dans une trame, dite trame LoRa montante, conforme au protocole LoRaWAN. La trame LoRa montante est transmise en mode multidiffusion (« broadcast » en terminologie anglo-saxonne). Cette trame LoRa montante est reçue par au moins une passerelle LoRa. Chaque passerelle LoRa ayant reçu la trame LoRa montante la décode et retransmet le message au serveur dans une requête HTTP (protocole de transfert hypertext, « HyperText Transfer Protocol » en terminologie anglo-saxonne). Si plusieurs passerelles LoRa ont reçu la trame LoRa montante, le serveur reçoit plusieurs requêtes HTTP contenant le message. Le serveur doit alors désigner parmi les passerelles LoRa ayant reçu la trame LoRa montante, la passerelle LoRa à utiliser pour relayer une réponse au message contenu dans la trame LoRa montante. La réponse est transmise du serveur à la passerelle LoRa désignée dans une requête HTTP, puis en point à point, de la passerelle LoRa désignée au terminal dans une trame LoRa descendante conforme au protocole LoRaWAN.

Bien que les réseaux LPWAN se répandent de plus en plus, il existe des zones hors de portée de ces réseaux. Ces zones n'ont alors pas accès à l'internet des objets.

D'autres réseaux offrent une couverture beaucoup plus fine des territoires, notamment dans les pays développés. On peut notamment penser aux réseaux électriques. Les réseaux électriques, qui à la base étaient destinés exclusivement au transport d'électricité, ont évolué dernièrement pour devenir des réseaux dans lesquels des données peuvent circuler. Les réseaux de communication par courants porteurs en ligne (« PowerLine Communications » en terminologie anglo-saxonne) pour des systèmes de type AMM (gestion automatique de relevés de compteurs, « Automated Meter Management » en terminologie anglo-saxonne) utilisent ainsi des infrastructures des réseaux électriques pour créer un réseau, dit réseau logique. Parmi ces réseaux logiques, dits réseaux CPL (Courants Porteurs en Ligne), on peut citer les réseaux conformes aux spécifications PRIME (« PoweRline Intelligent Metering Evolution » en terminologie anglo-saxonne) ou les réseaux conformes au standard G3-PLC spécifié dans la recommandation ITU-T G.9903. Dans les réseaux CPL, des communications sont établies entre des compteurs électriques, dits intelligents (« smart electrical meters » en terminologie anglo-saxonne), et un dispositif appelé *concentrateur de données* (« data concentrator » en terminologie anglo-saxonne) pour permettre notamment une relève automatisée à distance de mesures de consommation électrique effectuées par lesdits compteurs électriques intelligents. Par la suite nous appelons simplement *compteur* chaque compteur électrique intelligent. Une pluralité de concentrateurs de données est typiquement géographiquement déployée dans un réseau CPL de manière à répartir la charge de gestion à distance d'une multitude de compteurs. Chaque concentrateur de données est lui-même connecté à une même unité centralisée permettant la gestion du système de type AMM qui est gérée par un opérateur du réseau d'alimentation électrique auquel lesdits compteurs sont connectés.

Comme l'indique l'acronyme AMM, les réseaux CPL pour les systèmes de type AMM sont destinés à transporter des données de métrologie émanant de compteurs. Rien n'est prévu, ni en termes matériels, ni en termes protocolaires pour transporter autre chose que des données de métrologie provenant de compteurs. Les réseaux électriques, qui, contrairement aux réseaux LPWAN, couvrent finement les territoires, ne peuvent donc, à l'heure actuelle, être utilisés pour transporter des données provenant d'objets connectés dans des zones non couvertes par les réseaux LPWAN.

Le document EP 3 122 061 A1 décrit un système comportant des compteurs électriques intelligents connectés à un dispositif concentrateur via un premier réseau par courants porteurs en ligne, et connectés à une passerelle de collecte via un second réseau de type LPWAN.

Il est souhaitable de pallier ces inconvénients de l'état de la technique. Il est notamment souhaitable de proposer un procédé permettant de bénéficier de la couverture d'un réseau CPL pour les systèmes de type AMM pour acheminer vers un serveur des données en provenance d'objets connectés qui seraient hors de portée d'un réseau LPWAN. Les données de métrologie étant prioritaires sur les réseaux CPL pour les systèmes de type AMM, le procédé proposé doit assurer que le transport de données provenant d'objets connectés n'affecte pas le transport des données de métrologie.

Il est de plus souhaitable de fournir une solution qui soit simple à mettre en œuvre et à faible coût.

Selon un premier aspect de la présente invention, la présente invention concerne un procédé permettant de faire transporter des trames émises par des terminaux sur un réseau de type LPWAN par un premier réseau, dit réseau AMM, de communication par courants porteurs en ligne d'un système de gestion automatique de relevés d'une pluralité de compteurs électriques, dits compteurs, lesdits compteurs de la pluralité de compteurs étant rattachés à au moins un concentrateur de données via le réseau AMM, chaque concentrateur de données étant connecté à un serveur via un deuxième réseau et servant de relais entre lesdits compteurs et le serveur. Ledit procédé est exécuté par un compteur de la pluralité de compteurs et comprend : recevoir une trame conforme à un protocole de communication adapté aux réseaux de type LPWAN, chaque trame reçue correspondant à une même trame émise sur le réseau de type LPWAN par un terminal ; relayer une trame reçue, dite première trame, correspondant à ladite trame émise, en direction du serveur, la première trame étant sélectionnée suivant un premier critère prédéterminé ; lorsqu'une pluralité de trames correspondant à ladite trame émise est reçue, rejeter au moins un sous-ensemble des trames de la pluralité différentes de la première trame, chaque trame du sous-ensemble étant sélectionnée suivant un deuxième critère prédéterminé.

Le procédé de l'invention permet donc à des trames émises sur un réseau de type LPWAN de transiter par un réseau de communication par courants porteurs en ligne d'un système de gestion automatique de relevés d'une pluralité de compteurs électriques. Par ailleurs, le procédé de l'invention limite le nombre de trames réellement acheminées au serveur, ce qui permet de limiter une bande passante utilisée par les trames conformes au protocole de communication adapté aux réseaux de type LPWAN sur ledit réseau de communication par courant porteur en ligne.

Selon un mode de réalisation, le premier critère prédéterminé consiste à sélectionner la trame correspondant à ladite trame émise reçue en premier ou à sélectionner la première trame aléatoirement parmi les trames correspondant à ladite trame émise reçues pendant une période prédéterminée ou à sélectionner la première trame offrant une meilleure qualité de réception parmi les trames correspondant à ladite trame émise reçues pendant une période prédéterminée.

Selon un mode de réalisation, le deuxième critère prédéterminé consiste à rejeter chaque trame de la pluralité différente de la première trame ou à sélectionner aléatoirement une quantité prédéfinie de trames parmi les trames de la pluralité différentes de la première trame, toutes les autres trames de la pluralité étant rejetées ou à sélectionner une quantité prédéfinie de trames offrant une meilleure qualité de transmission parmi les trames de la pluralité différentes de la première trame, toutes les autres trames de la pluralité étant rejetées.

Selon un mode de réalisation, ledit compteur transmet une trame d'acquittement en direction du terminal pour acquitter ladite trame émise lorsqu'il a été désigné par le serveur pour acquitter chaque trame émise par ledit terminal.

Selon un deuxième aspect de l'invention, l'invention concerne un dispositif de type compteur électrique compris dans un premier réseau, dit réseau AMM, de communication par courants porteurs en ligne d'un système de gestion automatique de relevés d'une pluralité de compteurs électriques, lesdits compteurs de la pluralité de compteurs étant rattachés à au moins un concentrateur de données via le réseau AMM, chaque concentrateur de données étant connecté à un serveur via un deuxième réseau et servant de relais entre lesdits compteurs et le serveur. Ledit dispositif comprend :
des moyens de relais pour relayer en direction du serveur une trame reçue, dite première trame, par le dispositif, correspondant à une trame conforme à un protocole de communication adapté aux réseaux de type LPWAN émise par un terminal sur un réseau de type LPWAN, la première trame étant sélectionnée suivant un premier critère prédéterminé ; et,
des moyens de rejet, mis en œuvre lorsqu'une pluralité de trames correspondant à ladite trame émise est reçue, pour rejeter au moins un sous-ensemble des trames de la pluralité différentes de la première trame, chaque trame du sous-ensemble étant sélectionnée suivant un deuxième critère prédéterminé.

Selon un mode de réalisation, le dispositif comprend une interface de communication avec un réseau de type LPWAN permettant audit compteur de recevoir des trames conformes à un protocole de communication adapté aux réseaux de type LPWAN.

Selon un troisième aspect de l'invention, l'invention concerne un système, dit système AMM, de gestion automatique de relevés de compteurs électriques, dits compteurs, ledit système comprenant une pluralité de compteurs, au moins un concentrateur de données et un serveur, les compteurs de la pluralité de compteurs étant rattachés à un concentrateur de données via un premier réseau par courants porteurs en ligne, chaque concentrateur de données étant connecté au serveur via un deuxième réseau et servant de relais entre lesdits compteurs et le serveur. Au moins un compteur dudit système AMM est un dispositif selon le premier aspect, dit compteur LPWAN.

Selon un mode de réalisation, lorsque le système AMM comprend une pluralité de compteurs LPWAN, le serveur comprend des moyens pour déterminer pour chaque terminal communiquant avec un desdits compteurs LPWAN, quel compteur LPWAN communiquant avec ledit terminal doit acquitter chaque trame émise par ledit terminal.

Selon un quatrième aspect de l'invention, l'invention concerne un programme d'ordinateur comprenant des instructions pour mettre en œuvre, par un dispositif, le procédé selon le premier aspect lorsque ledit programme est exécuté par un processeur dudit dispositif.

Selon un cinquième aspect de l'invention, l'invention concerne des moyens de stockage stockant un programme d'ordinateur comprenant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de système de type AMM dans lequel est mise en œuvre l'invention ;
- la Fig. 2 illustre schématiquement une représentation d'un réseau logique correspondant à un réseau physique illustré dans la Fig. précédente;
- La Fig. 3 illustre schématiquement un exemple d'architecture matérielle d'un module de traitement ;
- la Fig. 4 illustre schématiquement un exemple de mise en œuvre dans un système de type AMM d'un procédé permettant d'acheminer des trames émises par des terminaux sur un réseau de type LPWAN ;
- la Fig. 5 illustre schématiquement une encapsulation d'une trame LoRa montante dans une trame G3-PLC ;
- la Fig. 6 illustre schématiquement une encapsulation d'une trame LoRa montante dans une trame HTTP;
- la Fig. 7 illustre schématiquement une encapsulation d'une trame LoRa descendante dans une trame G3-PLC ;
- la Fig. 8 illustre schématiquement une encapsulation d'une trame LoRa descendante dans une trame HTTP; et,
- la Fig. 9 illustre schématiquement une procédure d'autorisation de connexion adaptée à l'invention.

L'invention est décrite dans un contexte de réseau CPL d'un système de type AMM dans lequel les communications sont basées sur le protocole G3-PLC. Par ailleurs, comme nous le verrons par la suite, certains compteurs du réseau CPL comprennent une interface de communication permettant de communiquer sur un réseau LPWAN de type LoRa en utilisant des trames conformes au protocole LoRaWAN. L'invention pourrait tout aussi bien être utilisée dans un autre contexte. Le réseau CPL du système de type AMM pourrait tout aussi bien utiliser des communications basées sur les spécifications PRIME. Par ailleurs, le réseau LPWAN pourrait être un réseau SigFox.

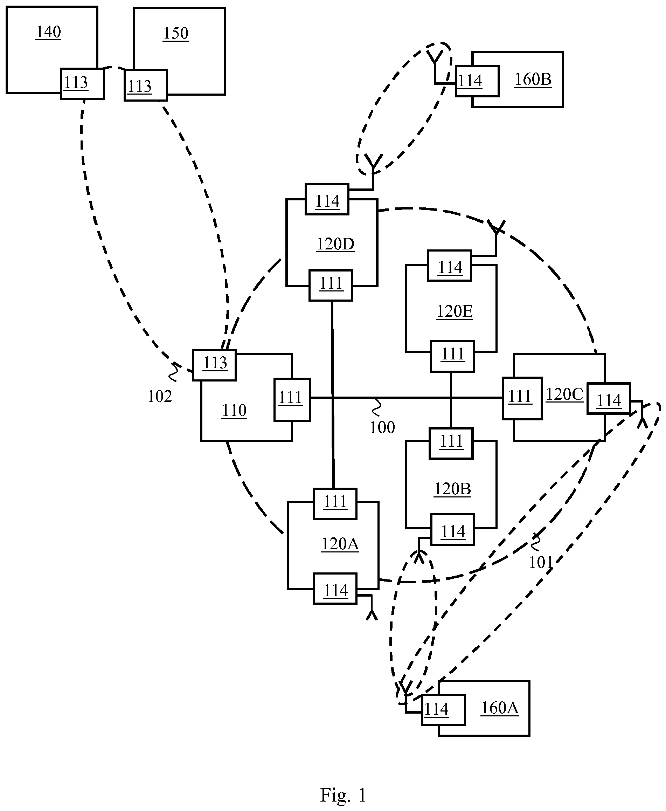

La **Fig. 1** illustre schématiquement un exemple de système de type AMM dans lequel est mise en œuvre l'invention.

Le système de type AMM de la Fig. 1 comporte un système de terminaison, dit système HES (« Head End System (HES) » en terminologie anglo-saxonne) 140. Le système HES 140 reçoit des informations de mesure de consommation électrique collectées par une pluralité de compteurs 120A, 120B, 120C, 120D et 120E (notés 120A-E) et les traite. Pour permettre auxdits compteurs de transmettre lesdites informations au système HES 140, des communications CPL sont établies entre chacun desdits compteurs et un concentrateur de données 110. Le système de communication comporte typiquement une pluralité de concentrateurs de données 110, un seul étant représenté sur la Fig. 1. A chaque concentrateur de données 110 est connecté, de manière logique, une pluralité de compteurs, chaque concentrateur de données 110 servant ainsi de relais entre lesdits compteurs qui lui sont connectés et le système HES 140.

Un réseau CPL 101 est ainsi formé entre chaque concentrateur de données 110 et la pluralité de compteurs qui lui est connectée. Ce réseau CPL 101 s'appuie sur un réseau de distribution électrique 100 (*i.e*. réseau physique) servant à alimenter en électricité les installations électriques que lesdits compteurs 120 sont en charge de surveiller. Chaque compteur 120A-E comporte ainsi une interface 111 de communication CPL permettant de communiquer via le réseau CPL 101. De même, chaque concentrateur de données 110 comporte une telle interface 111 de communication CPL permettant de communiquer via le réseau CPL 101. Selon un exemple de réalisation, le réseau CPL 101 est conforme au protocole G3-PLC.

Pour permettre de relayer les informations transmises par les compteurs 120A-E à destination du système HES 140, chaque concentrateur de données 110 comporte en outre une interface 113 de communication avec un réseau de communication 102, auquel est aussi connecté le système HES 140.

Le système HES 140 comporte ainsi une interface 113 de communication via le réseau de communication 102 lui permettant de communiquer avec une pluralité de concentrateurs de données 110. Le réseau de communication 102 est préférentiellement un réseau de type IP (« Internet Protocol » en terminologie anglo-saxonne, tel que défini dans le document normatif RFC 791), tel que l'Internet. Dans un mode de réalisation, les communications entre le concentrateur de données 110 et le système HES 140 utilisent des requêtes HTTP.

Dans la Fig. 1, chaque compteur 120A-E comprend une interface de communication 114 avec un réseau de type LPWAN de type LoRa, dit réseau LoRa. Le réseau LoRa permet à chaque compteur 120A-E de communiquer avec des terminaux se trouvant à portée desdits compteurs, chaque terminal étant connecté au réseau LoRa par l'intermédiaire d'une même interface de communication 114. Dans la Fig. 1, deux terminaux de type objet connecté 160A et 160B sont représentés. Les compteurs 120A-E et les terminaux 160A et 160B communiquent selon le protocole LoRaWAN. Dans la Fig. 1, chaque trame LoRa montante émise en mode multidiffusion par le terminal 160A est reçue par les compteurs 120B et 120C. Chaque trame LoRa montante émise en mode multidiffusion par le terminal 160B est reçue par le compteur 120D.

Chaque trame LoRa montante émise par un terminal est destinée à un serveur 150, dit serveur de réseau LoRa (« LoRa Network Server (LNS) » en terminologie anglo-saxonne) ou serveur LNS. Le serveur LNS 150 reçoit les trames LoRa montantes collectées par le concentrateur de données 110 et les traite.

Pour permettre au serveur LNS 150 de recevoir les trames LoRa montantes collectées par le concentrateur de données 110, le serveur LNS 150 comporte une interface de communication 113 avec le réseau de communication 102. Dans un mode de réalisation, les communications entre le concentrateur de données 110 et le serveur LNS 150 utilisent des requêtes HTTP.

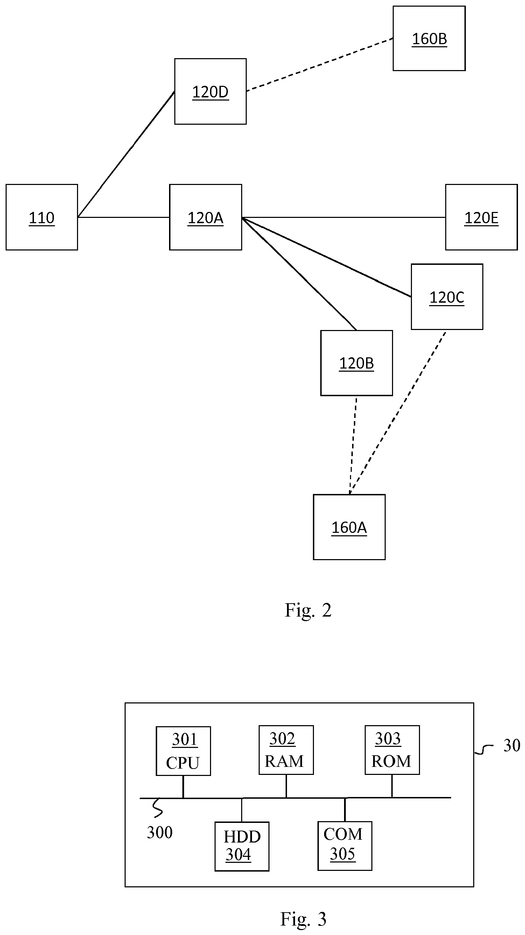

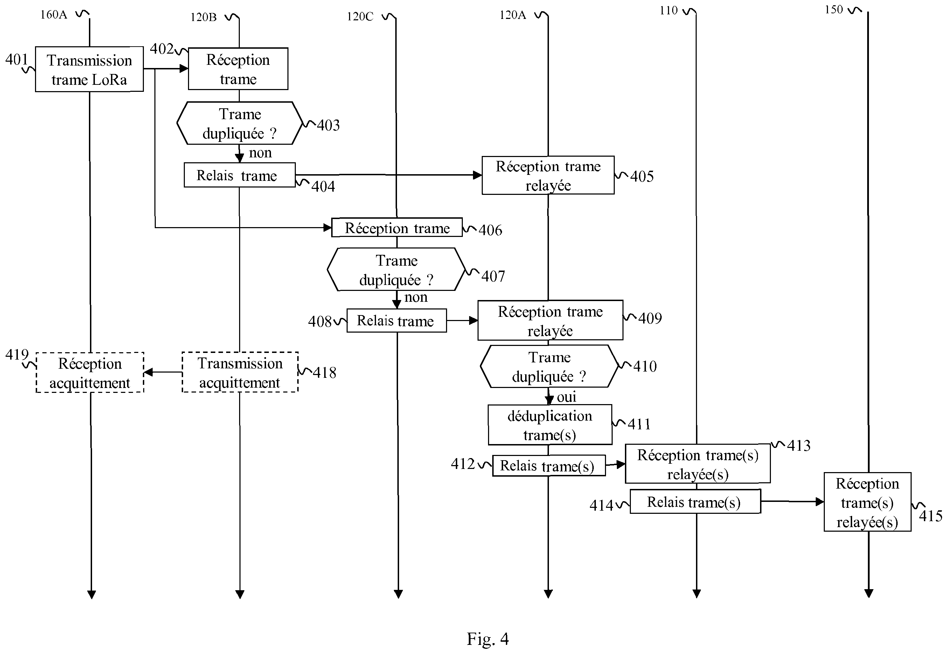

Dans le système de la Fig. 1, chaque compteur possédant une interface de communication 114 implémente une passerelle LoRa et joue donc un rôle similaire à une passerelle LoRa dans un réseau LoRa classique vis-à-vis des terminaux. Toutefois, comme nous le verrons par la suite en relation avec les Figs. 2 et 4, pour éviter de surcharger le système de type AMM par des requêtes LoRa, toutes les requêtes LoRa montantes reçues par un compteur 120A-E ne sont pas remontées au serveur LNS 150.

Chaque entité du système de la Fig. 1, que ce soit un concentrateur de données 110, un compteur 120A-E, le système HES 140 et le serveur LNS 150 comprend un module de traitement 30 (non représenté) permettant à ces entités de participer à une mise en œuvre de l'invention.

La **Fig. 2** illustre schématiquement une représentation d'un réseau logique correspondant au réseau CPL mis en œuvre sur le réseau électrique 100 illustré dans la Fig. 1.

Comme nous l'avons évoqué en relation avec la Fig. 1, chaque compteur 120A-E est connecté à un concentrateur de données 110. Par contre, d'un point de vue logique, certains compteurs, tels que les compteurs 120A et 120D sont connectés directement au concentrateur de données 110 alors que d'autres compteurs, tels que les compteurs 120B, 120C et 120E sont connectés indirectement au concentrateur de données 110 par l'intermédiaire d'un autre compteur. Ainsi, les compteurs 120A et 120D peuvent communiquer directement avec le concentrateur de données 110. Par contre, chaque trame conforme au standard G3-PLC, appelée *trame G3-PLC* par la suite, émise par les compteurs 120B, 120C et 120E doit passer par le compteur 120A pour atteindre le concentrateur de données 110. Il se crée donc une hiérarchie parent/enfant entre certains compteurs. Par exemple, le compteur 120A est parent vis-à-vis des compteurs 120B, 120C et 120E, qui sont eux-mêmes enfants du compteur 120A.

Comme nous l'avons vu en relation avec la Fig. 1, chaque trame LoRa montante émise par le terminal 160A est reçue par les compteurs 120B et 120C. Par conséquent, lorsqu'une trame LoRa montante est émise par le terminal 160A, celle-ci est reçue par le compteur 120B qui la relaie au compteur 120A et par le compteur 120C qui la relaie lui aussi au compteur 120A. La même trame LoRa montante est donc reçue deux fois par le compteur 120A. Dans un réseau LoRa classique, chaque passerelle LoRa recevant une trame LoRa montante, la relaie vers un serveur LNS avec lequel elle est connectée. Une passerelle LoRa ne se préoccupe pas de savoir si une ou plusieurs autres passerelles LoRa ont relayé la même trame LoRa montante. Dans un réseau LoRa classique, une passerelle LoRa recevant une trame LoRa montante, n'a aucun moyen de savoir si cette trame LoRa montante a été reçue et relayée vers le serveur LNS par une autre passerelle LoRa.

Comme on peut le voir dans la Fig. 2, la situation est différente lorsque la passerelle Lora est intégrée dans un compteur tel que les compteurs 120A-E. En effet, certains compteurs, comme le compteur 120A, du fait de l'organisation suivant une hiérarchie parent/enfant des compteurs dans le système de type AMM, reçoivent plusieurs fois la même trame. En analysant les trames LoRa montantes qu'il reçoit, un compteur peut savoir qu'il reçoit plusieurs fois la même trame LoRa montante.

La **Fig. 3** illustre schématiquement un exemple d'architecture matérielle du module de traitement 30.

Le module de traitement 30 comprend alors, reliés par un bus de communication 300: un processeur ou CPU 301 ; une mémoire vive RAM 302 ; une mémoire morte ROM 303 ; une unité de stockage ou un lecteur de support de stockage, tel qu'un lecteur de cartes SD 304 ; un ensemble d'interfaces de communication 305 permettant au module de traitement 30 de communiquer avec d'autres entités du système de la Fig. 1.

Lorsque le module de traitement 30 est compris dans un compteur 120A-E, l'ensemble d'interfaces de communication 305 comprend l'interface de communication 111 vers le réseau CPL 101 et l'interface de communication 114 vers un réseau LPWAN.

Lorsque le module de traitement 30 est compris dans un concentrateur de données 110, l'ensemble d'interfaces de communication 305 comprend l'interface de communication 111 vers le réseau CPL 101 et l'interface de communication 113 vers le réseau de communication 102.

Lorsque le module de traitement 30 est compris dans le système HES 140, l'ensemble d'interfaces de communication 305 comprend l'interface de communication 113 vers le réseau 102.

Lorsque le module de traitement 30 est compris dans le serveur LNS 150, l'ensemble d'interfaces de communication 305 comprend l'interface de communication 113 vers le réseau 102.

Lorsque le module de traitement 30 est compris dans un terminal 160A ou 160B, l'ensemble d'interfaces de communication 305 comprend l'interface de communication 114 vers le réseau LPWAN.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'entité (*i.e.* le concentrateur de données 110, un compteur 120A-E, le système HES 140, le serveur LNS 150, un terminal 160A ou 160B) est mise sous tension, le processeur 301 est capable de lire de la RAM 302 des instructions et de les exécuter. Ces instructions forment un programme d'ordinateur causant la mise en œuvre, par le processeur 301 d'un décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

La **Fig. 4** illustre schématiquement un exemple de mise en œuvre dans un système de type AMM d'un procédé permettant d'acheminer des trames émises par des terminaux sur un réseau de type LPWAN.

Dans la Fig. 4 nous prenons l'exemple d'une trame LoRa montante émise par le terminal 160A. Une mise en œuvre similaire aurait été obtenue pour une trame LoRa montante émise par le terminal 160B.

Dans une étape 401, le module de traitement 30 du terminal 160A provoque un envoi d'une trame LoRa Montante. Cette trame LoRa montante est transmise en mode multidiffusion par l'intermédiaire de l'interface de communication 114 du terminal 160A. La trame LoRa montante comprend un identifiant du terminal 160A sous forme d'une adresse *DevAddr.*

Dans une étape 402, le module de traitement 30 du compteur 120B détecte une réception par le compteur 120B sur son interface de communication 114, de la trame LoRa montante.

Bien que ces deux trames soient identiques, par la suite nous appelons la trame LoRa montante lorsqu'elle est envoyée par le terminal 160A, trame émise et la trame LoRa montante lorsqu'elle est reçue par un compteur, par exemple ici le compteur 120B, trame reçue.

Dans une étape 403, afin de décider si la trame reçue par le compteur 120B doit être relayée, le module de traitement 30 du compteur 120B détermine si cette trame respecte un premier critère prédéterminé.

Dans un mode de réalisation, dit mode non-temporisé, le critère prédéterminé consiste à sélectionner systématiquement la trame correspondant à ladite trame émise reçue en premier par le compteur 120B.

Dans un mode de réalisation, dit premier mode temporisé, lors de l'étape 403, le module de traitement 30 se met en attente pendant une période prédéterminée *TEMPO* suivant la première réception d'une trame correspondant à une même trame émise. La période prédéterminée *TEMPO* est par exemple de « 200 » ms. Dans ce mode de réalisation, le critère prédéterminé consiste à sélectionner aléatoirement une trame parmi les trames correspondant à ladite trame émise reçues par le compteur 120B pendant la période prédéterminée *TEMPO.*

Dans un mode de réalisation, dit deuxième mode temporisé, lors de l'étape 403, le module de traitement 30 se met en attente pendant la période prédéterminée *TEMPO* suivant la première réception d'une trame correspondant à une même trame émise. Dans ce mode de réalisation, le critère prédéterminé consiste à sélectionner la trame offrant une meilleure qualité de réception parmi les trames correspondant à ladite trame émise reçues pendant la période prédéterminée *TEMPO.*

Dans le cas de la Fig. 4, le compteur 120B ne reçoit qu'une fois la trame émise par le terminal 160A. Par conséquent, quel que soit le mode de réalisation, la seule trame reçue est sélectionnée pour être relayée.

Dans une étape 404, le module de traitement 30 du compteur 120B encapsule la trame reçue dans une trame G3-PLC et transmet cette trame G3-PLC en direction du concentrateur de données 110. Le compteur 120B transmet donc la trame G3-PLC au compteur 120A. La trame G3-PLC émise par le compteur 120B est appelée par la suite première trame G3-PLC.

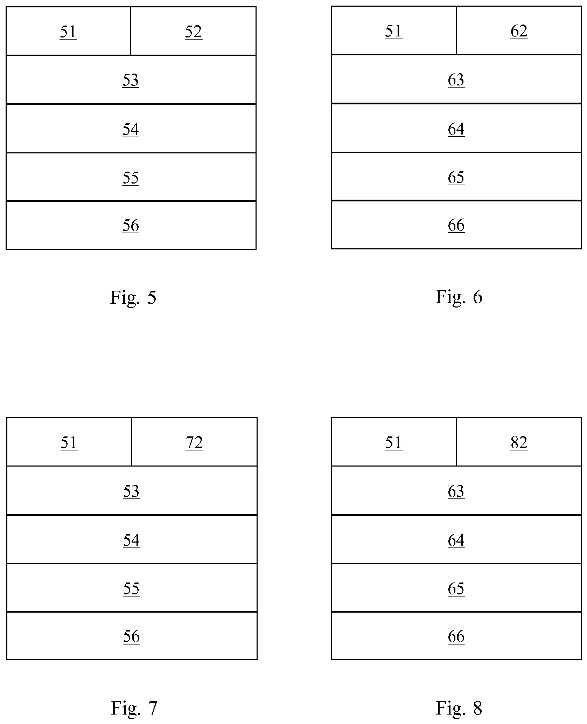

La **Fig. 5** illustre schématiquement une encapsulation d'une trame LoRa montante dans une trame G3-PLC.

La trame représentée dans la Fig. 5 est donc une trame conforme au standard G3-PLC. Cette trame G3-PLC comprend dans un champ 56, un entête G3-PLC, dans un champ 55, un entête 6LowPAN (Réseau local sans fils à faible puissance IPv6 :« IPv6 Low power Wireless Personal Area Networks » en terminologie anglo-saxonne), dans un champ 54, un entête IPv6 (Protocole Internet version 6 : « Internet Protocol version 6 » en terminologie anglo-saxonne) et dans un champ 53, un entête UDP (Protocole de datagram utilisateur : « User Datagram Protocol » en terminologie anglo-saxonne). La trame G3-PLC comprend en outre, une première sous-partie 51 comprenant la trame LoRa montante encapsulée et une deuxième sous-partie 52. Les sous-parties 51 et 52 forment une partie utile de la trame G3-PLC. La deuxième sous-partie 52 est destinée à recevoir des identifiants de chaque compteur ayant reçu directement (*i.e.* à travers une interface réseau 114) la trame LoRa encapsulée. Dans un mode de réalisation, chaque passerelle LoRa implémentée par un compteur possède une adresse IP (Protocole Internet : « Internet Protocol » en terminologie anglo-saxonne). L'identifiant d'un compteur ayant reçu la trame LoRa montante est dans ce cas, l'adresse IP de la passerelle LoRa implémentée par ce compteur. Dans un autre mode de réalisation, un service transport de LoRaWAN par G3-PLC implémenté par le compteur est associé à un numéro de port UDP. Dans ce mode de réalisation, l'identifiant d'un compteur ayant reçu directement la trame LoRa montante est une adresse IP du compteur et le numéro de port UDP celui associé au service de transport de LoRaWAN par G3-PLC. Cependant, étant donné que l'adresse IP source véhiculée par le protocole de transport IPv6 dans le champ 54 est toujours celle du compteur, on n'a plus besoin de transmettre d'adresse IP dans le champ 52.

Dans ces modes de réalisation, lors de l'étape 404, le compteur 120B stocke dans la sous-partie 52 l'identifiant du compteur 120B.

Dans un mode de réalisation, en plus de stocker un identifiant de chaque compteur ayant reçu la trame LoRa montante, la sous-partie 52 stocke pour chaque compteur ayant reçu la trame LoRa montante, une information représentative d'une qualité de réception de ladite trame LoRa montante par ledit compteur. L'information de qualité est par exemple un rapport signal sur bruit (« signal to noise ratio (SNR) » en terminologie anglo-saxonne) et/ou une indication sur la force du signal reçu (« received signal strength indication (RSSI) » en terminologie anglo-saxonne).

Dans ce mode de réalisation, la sous-partie 52 comprend une information représentative de la qualité de réception de la trame émise par le terminal 160A par le compteur 120B.

Dans une étape 406, le module de traitement 30 du compteur 120C détecte une réception par le compteur 120C sur son interface de communication 114, de la trame émise par le terminal 160A.

Dans une étape 407, le module de traitement 30 du compteur 120C applique une étape identique à l'étape 403. Le résultat de l'étape 407 est alors identique au résultat de l'étape 403, puisque le module de traitement 30 du compteur 120C sélectionne la seule trame reçue et relaie cette trame lors de l'étape 408 en direction du concentrateur de données 110 dans une trame G3-PLC. La trame G3-PLC émise par le compteur 120C est appelée par la suite deuxième trame G3-PLC.

La deuxième trame G3-PLC reprend le format de trame décrit en relation avec la Fig. 5. Dans la sous-partie 51, elle comprend la même trame LoRa montante que la première trame G3-PLC. Dans la sous-partie 52, elle comprend l'identifiant du compteur 120C. Dans un mode de réalisation, la sous-partie 52 comprend aussi une information représentative d'une qualité de réception de ladite trame LoRa montante par le compteur 120C.

Dans des étapes 405 et 409 le module de traitement 30 du compteur 120A reçoit respectivement la première trame G3-PLC et la deuxième trame G3-PLC sur son interface de communication 111.

Dans une étape 410, le module de traitement 30 du compteur 120A applique une étape identique aux étapes 403 et 407. Toutefois, alors que les étapes 403 et 407 ont été exécutées dans un contexte où les compteurs 120B et 120C ne recevaient chacun qu'une trame correspondant à la trame émise, lors de l'étape 410, le compteur 120A reçoit deux trames correspondant à la trame émise.

Dans le cas du mode non-temporisé, le module de traitement 30 du compteur 120A sélectionne la première trame reçue correspondant à la trame émise dès réception de cette trame. La trame reçue lors de l'étape 405 est donc sélectionnée pour être relayée.

Dans le cas du premier mode temporisé, le module de traitement 30 du compteur 120A sélectionne aléatoirement une trame parmi les trames correspondant à la trame émise qu'il a reçue. Par exemple, le module de traitement 30 du compteur 120A, sélectionne la trame reçue lors de l'étape 405 (*i.e*. la première trame G3-PLC).

Dans le cas du deuxième mode temporisé, le module de traitement 30 du compteur 120A sélectionne la trame offrant la meilleure qualité de réception parmi les trames correspondant à la trame émise qu'il a reçue. Pour ce faire, le module de traitement 30 du compteur 120A utilise les informations représentatives d'une qualité de réception contenues dans la sous-partie 52 de chaque trame G3-PLC reçue (*i.e*. la première et la deuxième trame G3-PLC). Par exemple, le module de traitement 30 du compteur 120A, sélectionne la trame reçue lors de l'étape 409 (*i.e.* la deuxième trame G3-PLC).

Lorsqu'une pluralité de trames correspondant à la trame émise est reçue, lors d'une étape 411, le module de traitement rejette au moins un sous-ensemble des trames de la pluralité différentes de la trame sélectionnée lors de l'étape 410, chaque trame du sous-ensemble étant sélectionnée suivant un deuxième critère prédéterminé.

Dans un mode de réalisation, le deuxième critère prédéterminé consiste à rejeter chaque trame de la pluralité différente de la trame sélectionnée lors de l'étape 410. Ainsi, dans ce mode de réalisation, chaque compteur 120A-E ne relaie qu'une seule trame correspondant à la trame émise vers le concentrateur de données 110.

Dans un mode de réalisation, le deuxième critère prédéterminé consiste à sélectionner aléatoirement une quantité prédéfinie de trames parmi les trames de la pluralité différente de la trame sélectionnée lors de l'étape 410, toutes les autres trames de la pluralité étant rejetées. Par exemple, le module de traitement 30 du compteur 120A sélectionne aléatoirement une trame parmi les trames de la pluralité différente de la trame sélectionnée lors de l'étape 410. Ainsi, dans ce mode de réalisation, chaque compteur 120A-E relaie deux trames correspondant à la trame émise vers le concentrateur de données 110.

Dans un mode de réalisation, le deuxième critère prédéterminé consiste à sélectionner une quantité prédéfinie de trames offrant une meilleure qualité de transmission parmi les trames de la pluralité différente de la trame sélectionnée lors de l'étape 410, toutes les autres trames de la pluralité étant rejetées. Pour ce faire, le module de traitement 30 du compteur 120A utilise les informations représentatives d'une qualité de réception contenues dans la sous-partie 52 de chaque trame G3-PLC reçue. Par exemple, le module de traitement 30 du compteur 120A sélectionne une trame parmi les trames de la pluralité différente de la trame sélectionnée lors de l'étape 410. Ainsi, dans ce mode de réalisation, chaque compteur 120A-E relaie deux trames correspondant à la trame émise vers le concentrateur de données 110. Par exemple, chaque compteur relaie les trames offrant les deux meilleures qualités de transmission parmi les trames de la pluralité.

Dans une étape 412, le module de traitement 30 du compteur 120A provoque le relais de chaque trame sélectionnée (*i*.*e*. chaque trame G3-PLC encapsulant une trame LoRa montante correspondant à la trame émise par le terminal 160A) vers le concentrateur de données 110. Chaque trame relayée respecte le format de trames décrit en relation avec la Fig. 5. Lors de l'étape 412, chaque trame relayée comprend la trame LoRa montante émise par le terminal 160A lors de l'étape 401 dans sa sous-partie 51. Par ailleurs, lors de l'étape 412, chaque trame relayée comprend dans sa sous-partie 52, l'identifiant de chaque compteur ayant reçu directement la trame LoRa montante (ici cela correspond aux compteurs 120B et 120C). Dans un mode de réalisation, la sous-partie 52 comprend de plus, pour chaque compteur ayant reçu directement la trame LoRa montante émise par le terminal 160A, une information représentative d'une qualité de réception de ladite trame par le compteur. Dans l'exemple de la Fig. 4, chaque trame G3-PLC relayée comprend une information représentative de la qualité de réception de la trame LoRa montante par le compteur 120B et une information représentative de la qualité de réception de la trame LoRa montante par le compteur 120C.

Dans une étape 413, le module de traitement 30 du concentrateur de données 110 détecte que le concentrateur de données 110 a reçu au moins une trame G3-PLC. Lors de l'étape 413, le module de traitement 30 détermine pour chaque trame G3-PLC reçue, si la trame G3-PLC contient des données de métrologie émanant d'un compteur ou si elle contient des données conformes au protocole LoRaWAN. Pour ce faire, le module de traitement 30 du concentrateur de données 110 détermine si la partie utile de la trame G3-PLC contient des sous-parties 51 et 52. Lorsque la trame G3-PLC comprend des données de métrologie, la partie utile de la trame G3-PLC est extraite et encapsulée dans une trame HTTP qui est transmise en direction du système HES 140. Lorsque la trame G3-PLC comprend des sous-parties 51 et 52, la partie utile de la trame G3-PLC est extraite et encapsulée dans une trame HTTP qui est transmise en direction du serveur LNS 150 dans une étape 414.

La **Fig. 6** illustre schématiquement une encapsulation d'une trame LoRa montante dans une trame HTTP.

La trame HTTP comprend dans un champ 66 par exemple un entête Ethernet, dans un champ 65 un entête IP (IPv4 ou IPv6), dans un champ 64 un entête TCP (protocole de contrôle de transmission : « transmission control protocol (TCP) » en terminologie anglo-saxonne) et dans un champ 63 un entête HTTP. On retrouve dans une partie utile de la trame HTTP la sous-partie 51 et une sous-partie 62, qui est identique à la sous-partie 52 dans le cas où on n'associe pas de numéro de port UDP au service de transport de LoRaWAN par G3-PLC (la sous-partie 62 comporte donc l'adresse IP de la passerelle LoRa implémentée par le compteur ayant relayé la trame LoRa montante), et qui comporte l'adresse IP du compteur implémentant la passerelle LoRa dans le cas où on associe un numéro de port UDP au service de transport de LoRaWAN par G3-PLC implémenté par le compteur ayant relayé la trame LoRa montante. En variante, on peut utiliser le protocole TLS (« Transport Layer Security » en terminologie anglo-saxonne) avec HTTP, ce qui correspond à HTTPS (« Hyper Text Transfert Protocol Secure » en terminologie anglo-saxonne), de manière à transmettre de manière sécurisée.

Lors d'une étape 415, le module de traitement 30 du serveur LNS 150 détecte que le serveur LNS 150 a reçu une trame HTTP contenant des données conformes au protocole LoRaWAN et traite ces données.

Dans un réseau LoRa classique, les échanges de messages entre un terminal et un serveur LNS sont bidirectionnels. Un serveur LNS peut par exemple acquitter une trame LoRa montante. Pour ce faire, comme nous l'avons vu plus haut, si plusieurs passerelles LoRa ont reçu une même trame LoRa montante, le serveur LNS doit désigner parmi les passerelles LoRa ayant reçu la trame LoRa montante, la passerelle LoRa à utiliser pour relayer une réponse au message contenu dans la trame LoRa montante. La réponse est transmise du serveur LNS à la passerelle LoRa désignée dans une requête HTTP, puis en point à point, de la passerelle LoRa désignée au terminal dans une trame LoRa descendante conforme au protocole LoRaWAN.

Appliquer une telle procédure dans le contexte d'un système de type AMM utilisé pour relayer des trames LoRa n'est pas envisageable. En effet, les systèmes AMM ont des temps de transfert de données qui sont incompatibles avec des contraintes de temps allouées par le protocole LoRaWAN à un terminal pour recevoir un acquittement après envoi par ledit terminal d'une trame LoRa montante.

Dans un mode de réalisation, le module de traitement 30 du serveur LNS 110 désigne, pour chaque terminal dont il a connaissance, un compteur parmi les compteurs aptes à relayer des trames LoRa montantes pour ledit terminal. Cette désignation peut se faire par exemple pendant une procédure de connexion d'un terminal à un réseau LoRa.

Nous supposons ici que la trame LoRa montante émise lors de l'étape 401 par le terminal 160A est une trame de demande de connexion (« Join Request » en terminologie anglo-saxonne). Dans ce cas, le procédé décrit en relation avec la Fig. 4 est un début d'une procédure de connexion correspondant à une phase de demande de connexion.

Lors de l'étape 415, le serveur LNS 150 reçoit donc dans la sous partie 51 d'au moins une trame HTTP, une trame de demande de connexion. Par ailleurs, dans la sous-partie 52, le serveur LNS 150 reçoit un identifiant des compteurs 120B et 120C. Dans un mode de réalisation, le module de traitement 30 du serveur LNS 150 choisit aléatoirement un compteur parmi les compteurs ayant un identifiant dans la sous-partie 52. Dans un autre mode de réalisation, lorsque la sous-partie 52 comprend aussi des informations représentatives de qualités de réception de la trame LoRa montante comprise dans la sous-partie 51, le module de traitement 30 du serveur LNS 150 choisit le compteur associé à la meilleure information représentative de qualité. Par exemple, le module de traitement 30 du serveur LNS 150 choisit le compteur 120B. Le compteur désigné est alors utilisé pour chaque transmission d'une trame LoRa descendante par le serveur LNS 150 au terminal 160A. La désignation du compteur 120B peut être définitive ou remise à jour périodiquement, par exemple, toutes les « 24 » heures. En cas de remise à jour périodique, le module de traitement 30 du serveur LNS 150 s'appuie sur le contenu de la sous-partie 52 associée à une trame LoRa montante quelconque qu'il reçoit, sans que cette trame LoRa montante soit nécessairement une trame de demande de connexion.

Suite à la réception de la trame de demande de connexion, le serveur LNS répond par une trame de d'autorisation de connexion (« JOIN ACCEPT » en terminologie anglo-saxonne).

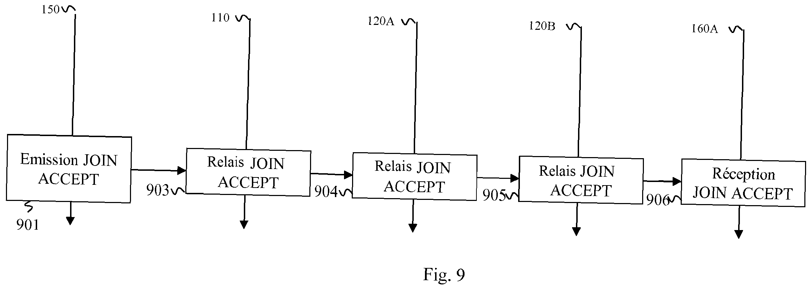

La **Fig. 9** illustre schématiquement une procédure d'autorisation de connexion.

Dans une étape 901, le module de traitement du serveur LNS 150 génère une trame LoRa descendante contenant une autorisation de connexion, dite trame d'autorisation de connexion, destinée au dispositif 160A, encapsule la trame d'autorisation de connexion dans une trame HTTP et provoque la transmission par le serveur LNS 150 de la trame HTTP au concentrateur de données 110.

La **Fig. 8** illustre schématiquement une encapsulation d'une trame LoRa descendante dans une trame HTTP.

On retrouve dans la trame HTTP, les champs 63, 64, 65 et 66. La sous-partie 51 comprend la trame d'autorisation de connexion. La trame HTTP comprend de plus une sous-partie 82. La sous-partie 82 comprend l'identifiant du compteur désigné. Dans l'exemple de la Fig. 9, il s'agit du compteur 120B. Par ailleurs, la sous-partie 82 comprend une date d'émission souhaitée de la trame LoRa descendante par le compteur désigné (*i.e*. le compteur 120B). Cette date d'émission est une date relative par rapport à une date de réception d'une trame LoRa montante par le compteur désigné.

Dans une étape 903, le concentrateur de données 110 reçoit la trame HTTP. Lors de l'étape 903, le module de traitement 30 du concentrateur de données 110 extrait la partie utile de la trame HTTP (*i.e.* les sous-parties 51 et 82) et forme une trame G3-PLC en utilisant cette partie utile.

La **Fig. 7** illustre schématiquement une encapsulation d'une trame LoRa descendante dans une trame G3-PLC.

On retrouve dans la trame G3-PLC, les champs 53, 54, 55 et 56. La sous-partie 51 comprend la trame LoRa descendante. Une sous-partie 72 comprend la date d'émission souhaitée de la trame LoRa descendante par le compteur désigné indiquée dans la sous-partie 82.

Lors de l'étape 903, le module de traitement 30 du concentrateur de données 110 lit l'adresse du compteur désigné dans la sous-partie 82 (ou 72) et détermine que pour atteindre le compteur désigné (*i.e*. le compteur 120B), il doit transmettre la trame G3-PLC qu'il a formée au compteur 120A. Le module de traitement 30 du concentrateur de données 110 provoque ensuite l'envoi de la trame G3-PLC au compteur 120A.

Dans une étape 904, le compteur 120A reçoit la trame G3-PLC. Lors de l'étape 904, le compteur 120A relaie cette trame en direction du compteur 120B.

Dans une étape 905, le module de traitement 30 du compteur 120B détecte que le compteur 120B a reçu la trame G3-PLC et extrait la trame LoRa descendante de la trame G3-PLC. Le module de traitement 30 du compteur 120B se met en attente d'une réception d'une trame LoRa montante de la part du terminal 160A. Lorsque le module de traitement 30 du compteur 120B détecte une réception d'une trame LoRa montante, il note la date de réception de cette trame LoRa montante, ajoute la valeur de la date d'émission souhaitée contenu dans la trame G3-PLC reçue lors de l'étape 905 à la date de réception pour obtenir une date effective de transmission, et transmet la trame LoRa descendante au terminal 160A à la date effective de transmission ainsi calculée. La trame LoRa descendante contient aussi un acquittement de la dernière trame LoRa montante reçue. Lors de l'étape 905, le module de traitement 30 du compteur 120B détermine que son identifiant a été inséré dans la sous-partie 72 et en déduit qu'il a été désigné pour transmettre chaque message en provenance du serveur LNS 150 et destiné au terminal 160A. Par ailleurs, le module de traitement 30 du compteur 120A détermine qu'il doit à partir de maintenant acquitter chaque trame LoRa émise par le terminal 160A.

Dans une étape 906, le dispositif 160A reçoit la trame LoRa descendante.

Dans l'exemple de la Fig. 9, la trame LoRa descendante est donc une autorisation de connexion. Un procédé similaire est appliqué pour toute autre trame transmise par le serveur LNS 150 au terminal 160A.

De retour à la Fig. 4, on suppose cette fois que la trame LoRa montante émise par le terminal 160A est une trame contenant un message destiné au serveur LNS 150. Une procédure de connexion avec émission d'une trame de demande de connexion par le terminal 160A et transmission d'une autorisation de connexion par le serveur LNS 150 a été exécutée préalablement. Comme nous l'avons vu plus haut, le serveur LNS 150 n'acquitte pas les trames LoRa montantes, mais délègue la charge de procéder aux acquittements à un compteur qu'il a désigné. La procédure de connexion exécutée préalablement et décrite en relation avec les Figs. 4 et 9 a permis de désigner le compteur 120B pour procéder aux acquittements des trames LoRa montantes provenant du terminal 160A.

Dans un réseau LoRa classique, un terminal et le serveur LNS gèrent chacun une variable FcntUP et une variable FcntDOWN. Pour les différencier, les variables FcntUP et FcntDOWN du terminal sont appelées par la suite respectivement FcntUP_T et FcntDown_T. Toutes ces variables sont soit sur 32 bit (Mode 32 bit : cas usuel), soit sur 16 bit (Mode 16 bit : variante). Par contre, on ne transporte dans les trames LoRAWAN que les 16 bit de poids faible quel que soit le mode. Les variables FcntUP et FcntDOWN du serveur LNS sont appelées par la suite respectivement FcntUP_S et FcntDown_S. Le serveur LNS gère un couple de variables FcntUP_S et FcntDown_S pour chaque terminal dont il a connaissance. La variable FcntUP_T est incrémentée d'une unité à chaque fois que le terminal transmet une trame LoRa montante. La variable FcntDown_T est remise à jour à chaque fois que le terminal reçoit une trame LoRa descendante. Dans le cas du mode 32 bit, le terminal prend en compte la valeur sur 16 bit reçue dans la trame et gère un incrément de la variable FcntDown_T en fonction de cette valeur sur 16 bit reçue, en particulier concernant le 17^{ème} bit en partant de la droite de la variable sur 32 bit. Dans le cas du mode 16 bit, le terminal recopie la valeur sur 16 bit reçue dans la trame dans sa variable locale. La variable FcntUP_S est gérée exactement de la même manière par le serveur LNS que la variable FcntDown_T du terminal, à chaque fois que le serveur LNS reçoit une trame LoRa montante du terminal avec lequel la variable est associée. La variable FcntDown_S est incrémentée d'une unité à chaque fois que le serveur LNS transmet une trame LoRa descendante au terminal avec lequel la variable est associée. Lors de la procédure de connexion au réseau LoRa, les variables FcntUP_T, FcntDown_T, FcntUP_S et FcntDown S sont mises à zéro. Lorsqu'un terminal transmet une trame LoRa montante, il insère dans cette trame la valeur de son compteur FcntUP_T. Lorsqu'un serveur LNS transmet une trame LoRa descendante, il insère dans cette trame la valeur de son compteur FcntDown_S. Lorsque le serveur LNS reçoit de la part d'un terminal une trame LoRa montante contenant une variable FcntUP_T dont la valeur est inférieure à la valeur de la variable FcntUP_S associée audit terminal, il rejette la trame Lora montante. Lorsqu'un terminal reçoit de la part du serveur LNS une trame LoRa descendante contenant une variable FcntDown_S dont la valeur est inférieure à la valeur de la variable FcntDown_T, il rejette la trame LoRa descendante.

Dans le cadre de l'invention, un compteur désigné par le serveur LNS 150 pour transmettre des trames Lora descendantes à un terminal et pour acquitter les trames LoRa montantes provenant de ce terminal, se voit aussi déléguer la gestion des variables FcntUP_S et FcntDown_S pour ledit terminal en lieu et place du serveur LNS 150. Dans l'exemple de la Fig. 4, le module de traitement 30 du compteur 120B doit gérer les variables FcntUP_S et FcntDown_S associées au terminal 160A. A chaque fois que le compteur 120B relaie une trame LoRa descendante destinée au terminal 160A ou transmet une trame d'acquittement au terminal 160A, le module de traitement 30 incrémente d'une unité la valeur de la variable FcntDown_S et insère cette valeur dans la trame LoRa descendante ou dans la trame d'acquittement. A chaque fois que le compteur 120B reçoit une trame LoRa montante du terminal 160A, il met à jour la variable FcntUP_S comme indiqué ci-avant dans le cas d'un réseau LoRa classique. De la même manière qu'un serveur LNS classique, lorsque le compteur 120B reçoit de la part du terminal 160A une trame LoRa montante transportant une valeur de la variable FcntUP_T inférieure à la valeur de la variable FcntUP_S, le module de traitement 30 du compteur 120B rejette ladite trame.

Suite à la réception de la trame LoRa montante émise par le terminal 160A par le compteur 120B lors de l'étape 402, le module de traitement 30 du compteur 120B exécute une étape 418. Lors de l'étape 418, le module de traitement 30 du compteur 160A génère une trame d'acquittement, incrémente d'une unité la valeur des variables FcntUP_S et FcntDown_S et insère la valeur de la variable FcntDown_S dans la trame d'acquittement. La trame d'acquittement est ensuite transmise au terminal 160A. On suppose que chaque compteur en charge d'acquitter des trames LoRa montantes en lieu et place du serveur LNS 150, a préalablement mémorisé des informations du protocole LoRaWAN telles que une clé NtwSEndKey et une clé SNwkSIntKey, chacune de ces clés étant uniques pour chaque terminal. La clé NtwSEndKey est utilisée pour coder une partie utile (« payload » en terminologie anglo-saxonne) de la trame d'acquittement. La clé SNwkSIntKey est utilisée pour coder la partie MIC (code d'intégrité de message : « message integrity code » en terminologie anglo-saxonne) de la trame d'acquittement.

Dans une étape 419, le terminal 160A reçoit la trame d'acquittement et vérifie que la valeur de la variable FcntDown_S est supérieure à la valeur de la variable FcntDown_T. Si la valeur de la variable FcntDown_S est supérieure à la valeur de la variable FcntDown_T, le terminal 160A accepte la trame d'acquittement et incrémente la valeur de la variable FcntDown_T d'une unité.

On note que comme dans un réseau LoRa classique, les acquittements de trames dans le cadre de l'invention sont optionnels.

Jusque-là, nous avons supposé que les compteurs 120A-E sont strictement identiques. Ainsi chaque compteur 120A-E comprend une interface possédant une interface de communication 114 et implémente une passerelle LoRa.

Dans un mode de réalisation, tous les compteurs 120A-E implémentent une passerelle LoRa, mais ne comprennent pas nécessairement une interface de communication 114. Un compteur 120A-E peut donc implémenter une passerelle Lora sans pour autant être capable de recevoir ou transmettre des trames LoRa. Par exemple, dans ce mode de réalisation, le compteur 120A ne comprend pas d'interface de communication 114 mais implémente une passerelle LoRa ce qui lui permet d'exécuter notamment les étapes 405, 409, 410, 411, 412 et 904.

Dans un mode de réalisation, certains compteurs ne comportent pas d'interface de communication 114 et n'implémentent pas de passerelle LoRa. Ces compteurs peuvent alors être des compteurs intermédiaires entre deux compteurs implémentant une passerelle LoRa. Ces compteurs ne font alors que relayer des trames G3-PLC, sans se préoccuper du contenu de ces trames.

Lorsque le système de communication comporte une pluralité de concentrateurs de données 110, il est possible que le serveur LNS 150 reçoive plusieurs trames HTTP encapsulant la même trame LoRa montante de la part de plusieurs concentrateurs de données 110 différents. Dans ce cas, les sous-parties 62 de chaque trame HTTP reçue contiennent des informations représentatives d'ensembles de compteurs ayant reçu la trame LoRa montante différents. On peut en effet imaginer qu'une trame LoRa montante émise par le terminal 160A est reçue par les compteurs 120B, 120C et 120D, mais que les compteurs 120B et 120C sont rattachés à un premier concentrateur de données 110 alors que le compteur 120D est rattaché à un deuxième concentrateur de données 110. Dans ce cas, le module de traitement 30 du serveur LNS 150 prend en compte toutes les trames HTTP contenant la même trame LoRa montante. Lorsque le module de traitement 30 du serveur LNS 150 doit désigner un compteur pour relayer des trames vers un terminal ou pour acquitter des trames, il le désigne parmi les compteurs indiqués dans les sous-parties 62 de chaque trame HTTP reçue.

## Revendications

1. Procédé permettant de faire transporter des trames émises par des terminaux sur un réseau de type LPWAN, Low Power Wide Area Network, par un premier réseau (101), dit réseau AMM, de communication par courants porteurs en ligne d'un système de gestion automatique de relevés d'une pluralité de compteurs électriques (120A, 120B, 120C, 120D, 120E), dits compteurs, lesdits compteurs de la pluralité de compteurs étant rattachés à au moins un concentrateur de données (110) via le réseau AMM, chaque concentrateur de données étant connecté à un serveur (150) via un deuxième réseau (102) et servant de relais entre lesdits compteurs et le serveur, **caractérisé en ce que** ledit procédé est exécuté par un compteur de la pluralité de compteurs et comprend :
recevoir (402) au moins une trame conforme à un protocole de communication adapté aux réseaux de type LPWAN, chaque trame reçue correspondant à une même trame émise sur le réseau de type LPWAN par un terminal ;
relayer (404) une trame reçue, dite première trame, correspondant à ladite trame émise en direction du serveur, la première trame étant sélectionnée (403) suivant un premier critère prédéterminé ;
lorsqu'une pluralité de trames correspondant à ladite trame émise est reçue, rejeter au moins un sous-ensemble des trames de la pluralité différentes de la première trame, chaque trame du sous-ensemble étant sélectionnée suivant un deuxième critère prédéterminé.

2. Procédé selon la revendication 1, **caractérisé en ce que** le premier critère prédéterminé consiste à sélectionner la trame correspondant à ladite trame émise reçue en premier ou à sélectionner la première trame aléatoirement parmi les trames correspondant à ladite trame émise reçues pendant une période prédéterminée ou à sélectionner la première trame offrant une meilleure qualité de réception parmi les trames correspondant à ladite trame émise reçues pendant une période prédéterminée.

3. Procédé selon la revendication 1 ou 2, **caractérisé en ce que** le deuxième critère prédéterminé consiste à rejeter chaque trame de la pluralité différente de la première trame ou à sélectionner aléatoirement une quantité prédéfinie de trames parmi les trames de la pluralité différentes de la première trame, toutes les autres trames de la pluralité étant rejetées ou à sélectionner une quantité prédéfinie de trames offrant une meilleure qualité de transmission parmi les trames de la pluralité différentes de la première trame, toutes les autres trames de la pluralité étant rejetées.

4. Procédé selon la revendication 1, 2 ou 3, **caractérisé en ce que** ledit compteur transmet une trame d'acquittement en direction du terminal pour acquitter ladite trame émise lorsqu'il a été désigné par le serveur pour acquitter chaque trame émise par ledit terminal.

5. Dispositif de type compteur électrique compris dans un système, dit système AMM, de gestion automatique de relevés d'une pluralité de compteurs électriques (120A, 120B, 120C, 120D, 120E) lesdits compteurs de la pluralité de compteurs étant rattachés à au moins un concentrateur de données (110) via un premier réseau par courants porteurs en ligne (101), chaque concentrateur de données étant connecté à un serveur (150) via un deuxième réseau (102) et servant de relais entre lesdits compteurs et le serveur, **caractérisé en ce que** ledit dispositif comprend :
des moyens de relais pour relayer en direction du serveur une trame reçue par le dispositif, dite première trame, correspondant à une trame conforme à un protocole de communication adapté aux réseaux de type LPWAN, Low Power Wide Area Network, émise par un terminal sur un réseau de type LPWAN, la première trame étant sélectionnée suivant un premier critère prédéterminé ; et,
des moyens de rejet, mis en œuvre lorsqu'une pluralité de trames correspondant à ladite trame émise est reçue, pour rejeter au moins un sous-ensemble des trames de la pluralité différentes de la première trame, chaque trame du sous-ensemble étant sélectionnée suivant un deuxième critère prédéterminé.

6. Dispositif selon la revendication 5, **caractérisé en ce qu'**il comprend une interface de communication (114) avec un réseau de type LPWAN permettant audit compteur de recevoir des trames conformes à un protocole de communication adapté aux réseaux de type LPWAN.

7. Système, dit système AMM, de gestion automatique de relevés de compteurs électriques, dits compteurs, ledit système comprenant une pluralité de compteurs (120A, 120B, 120C, 120D, 120E), au moins un concentrateur de données (110) et un serveur (150), les compteurs de la pluralité de compteurs étant rattachés à un concentrateur de données via un premier réseau par courants porteurs en ligne (101), chaque concentrateur de données étant connecté au serveur via un deuxième réseau (102) et servant de relais entre lesdits compteurs et le serveur, **caractérisé en ce que** au moins un compteur dudit système AMM est un dispositif selon la revendication 6, dit compteur LPWAN.

8. Système selon la revendication 7, **caractérisé en ce que** au moins un compteur du système AMM est un dispositif selon la revendication 5.

9. Système selon la revendication 7 ou 8, **caractérisé en ce que**, lorsque le système AMM comprend une pluralité de compteurs LPWAN, le serveur comprend des moyens pour déterminer pour chaque terminal communiquant avec un desdits compteurs LPWAN, quel compteur LPWAN communiquant avec ledit terminal doit acquitter chaque trame émise par ledit terminal.

10. Programme d'ordinateur, **caractérisé en ce qu'**il comprend des instructions pour mettre en œuvre, par un dispositif, le procédé selon l'une des revendications 1 à 4 lorsque ledit programme est exécuté par un processeur dudit dispositif.

11. Moyens de stockage, **caractérisés en ce qu'**ils stockent un programme d'ordinateur comprenant des instructions pour mettre en œuvre, par un dispositif, le procédé selon l'une des revendications 1 à 4 lorsque ledit programme est exécuté par un processeur dudit dispositif

## Patentansprüche

1. Verfahren zum Transportieren von Frames, die von Endgeräten gesendet werden, an ein Netzwerk vom Typ LPWAN (Low Power Wide Area Network) über ein erstes Powerline-Kommunikationsnetzwerk (101), als AMM-Netzwerk bezeichnet, eines Systems zur automatischen Verwaltung von Ablesungen einer Vielzahl von elektrischen Zählern (120A, 120B, 120C, 120D, 120E), als Zähler bezeichnet, wobei die Zähler der Vielzahl von Zählern über das AMM-Netzwerk mit mindestens einem Datenkonzentrator (110) verbunden sind, wobei jeder Datenkonzentrator über ein zweites Netzwerk (102) mit einem Server (150) verbunden ist und als Vermittler zwischen den Zählern und dem Server dient, **dadurch gekennzeichnet, dass** das Verfahren von einem Zähler der Vielzahl von Zählern ausgeführt wird und Folgendes beinhaltet:
Empfangen (402) mindestens eines Frames, der mit einem Kommunikationsprotokoll, das für die Netzwerke vom Typ LPWAN geeignet ist, übereinstimmt, wobei jeder empfangene Frame einem gleichen Frame, der durch ein Endgerät an das Netzwerk vom Typ LPWAN gesendet wird, entspricht;
Vermitteln (404) eines empfangenen Frames, als erster Frame bezeichnet, der dem an den Server gesendeten Frame entspricht, wobei der erste Frame gemäß einem vorgegebenen ersten Kriterium ausgewählt (403) wird;
wenn eine Vielzahl von Frames, die dem gesendeten Frame entsprechen, empfangen wird, Ablehnen mindestens eines Teilsatzes der Frames der Vielzahl, die sich von dem ersten Frame unterscheiden, wobei jeder Frame des Teilsatzes gemäß einem vorgegebenen zweiten Kriterium ausgewählt wird.

2. Verfahren nach Anspruch 1, **dadurch gekennzeichnet, dass** das vorgegebene erste Kriterium darin besteht, den zuerst empfangenen Frame, der dem gesendeten Frame entspricht, auszuwählen oder den ersten Frame aus den innerhalb eines vorgegebenen Zeitraums empfangenen Frames, die dem gesendeten Frame entsprechen, zufällig auszuwählen oder den ersten Frame mit der besseren Empfangsqualität aus den während eines vorgegebenen Zeitraums empfangenen Frames, die dem gesendeten Frame entsprechen, auszuwählen.

3. Verfahren nach Anspruch 1 oder 2, **dadurch gekennzeichnet, dass** das vorgegebene zweite Kriterium darin besteht, jeden Frame der Vielzahl, der sich von dem ersten Frame unterscheidet, abzulehnen oder eine vordefinierte Menge von Frames aus den Frames der Vielzahl, die sich von dem ersten Frame unterscheiden, zufällig auszuwählen, wobei alle anderen Frames der Vielzahl abgelehnt werden, oder eine vordefinierte Menge von Frames mit einer besseren Übertragungsqualität aus den Frames der Vielzahl, die sich von dem ersten Frame unterscheiden, auszuwählen, wobei alle anderen Frames der Vielzahl abgelehnt werden.

4. Verfahren nach Anspruch 1, 2 oder 3, **dadurch gekennzeichnet, dass** der Zähler einen Quittierungs-Frame an das Endgerät überträgt, um den gesendeten Frame zu quittieren, wenn er vom Server designiert wurde, jeden durch das Endgerät gesendeten Frame zu quittieren.

5. Vorrichtung vom Typ eines elektrischen Zählers, die in einem System, als AMM-System bezeichnet, zur automatischen Verwaltung von Ablesungen einer Vielzahl von elektrischen Zählern (120A, 120B, 120C, 120D, 120E) enthalten ist, wobei die Zähler der Vielzahl von Zählern über ein erstes Powerline-Netzwerk (101) mit mindestens einem Datenkonzentrator (110) verbunden sind, wobei jeder Datenkonzentrator über ein zweites Netzwerk (102) mit einem Server (150) verbunden ist und als Vermittler zwischen den Zählern und dem Server dient, **dadurch gekennzeichnet, dass** die Vorrichtung Folgendes beinhaltet:
Vermittlungsmittel zum Vermitteln, an den Server, eines durch die Vorrichtung empfangenen Frames, als erster Frame bezeichnet, der einem Frame entspricht, der mit einem Kommunikationsprotokoll, das für die Netzwerke vom Typ LPWAN (Low Power Wide Area Network) geeignet ist, übereinstimmt, gesendet durch ein Endgerät an ein Netzwerk vom Typ LPWAN, wobei der erste Frame gemäß einem vorgegebenen ersten Kriterium ausgewählt wird; und
Ablehnungsmittel, die eingesetzt werden, wenn eine Vielzahl von Frames, die dem ersten gesendeten Frame entsprechen, empfangen wird, um mindestens einen Teilsatz der Frames der Vielzahl, die sich von dem ersten Frame unterscheiden, abzulehnen,
wobei jeder Frame des Teilsatzes gemäß einem vorgegebenen zweiten Kriterium ausgewählt wird.

6. Vorrichtung nach Anspruch 5, **dadurch gekennzeichnet, dass** sie eine Kommunikationsschnittstelle (114) zu einem Netzwerk vom Typ LPWAN beinhaltet, die es dem Zähler gestattet, Frames, die mit einem Kommunikationsprotokoll, das für die Netzwerke vom Typ LPWAN geeignet ist, übereinstimmen, zu empfangen.

7. System, als AMM-System bezeichnet, zur automatischen Verwaltung von Ablesungen von elektrischen Zählern, als Zähler bezeichnet, wobei das System eine Vielzahl von Zählern (120A, 120B, 120C, 120D, 120E), mindestens einen Datenkonzentrator (110) und einen Server (150) beinhaltet, wobei die Zähler der Vielzahl von Zählern über ein erstes Powerline-Netzwerk (101) mit einem Datenkonzentrator verbunden sind, wobei jeder Datenkonzentrator über ein zweites Netzwerk (102) mit dem Server verbunden ist und als Vermittler zwischen den Zählern und dem Server dient, **dadurch gekennzeichnet, dass** mindestens ein Zähler des AMM-Systems eine Vorrichtung nach Anspruch 6 ist, als LPWAN-Zähler bezeichnet.

8. System nach Anspruch 7, **dadurch gekennzeichnet, dass** mindestens ein Zähler des AMM-Systems eine Vorrichtung nach Anspruch 5 ist.

9. System nach Anspruch 7 oder 8, **dadurch gekennzeichnet, dass**, wenn das AMM-System eine Vielzahl von LPWAN-Zählern beinhaltet, der Server Mittel beinhaltet, um für jedes Endgerät, das mit einem der LPWAN-Zähler kommuniziert, zu bestimmen, welcher LPWAN-Zähler, der mit dem Endgerät kommuniziert, jeden durch das Endgerät gesendeten Frame quittieren muss.

10. Computerprogramm, **dadurch gekennzeichnet, dass** es Anweisungen zur Umsetzung des Verfahrens nach einem der Ansprüche 1 bis 4 durch eine Vorrichtung beinhaltet, wenn das Programm durch einen Prozessor der Vorrichtung ausgeführt wird.

11. Speichermittel, **dadurch gekennzeichnet, dass** sie ein Computerprogramm speichern, das Anweisungen zur Umsetzung des Verfahrens nach einem der Ansprüche 1 bis 4 durch eine Vorrichtung beinhaltet, wenn das Programm durch einen Prozessor der Vorrichtung ausgeführt wird.

## Claims

1. Method for transporting frames sent by endpoints over a low power wide area LPWAN network by means of a first so called AMM powerline communication network (101) of a system for the automated management of metering from a plurality of electricity meters (120A, 120B, 120C, 120D, 120E), referred to as meters, said meters in the plurality of meters being attached to at least one data concentrator via the AMM network, each data concentrator being connected to a server (150) via a second network (102) and serving as a relay between said meters and the server, wherein said method is executed by a meter in the plurality of meters and comprises:
receiving (402) at least one frame in accordance with a communication protocol suited to LPWAN networks, each frame received corresponding to a same frame sent over the LPWAN network by an endpoint;
relaying (404) a received frame, referred to as the first frame, corresponding to said sent frame, in the direction of the server, the first frame being selected (403) in accordance with a first predetermined criterion;
when a plurality of frames corresponding to said sent frame is received, rejecting at least a subset of frames in the plurality of frames different from the first frame, each frame in the subset being selected in accordance with a second predetermined criterion.

2. Method according to claim 1, **characterized in that** the first predetermined criterion consists of selecting the frame corresponding to said sent frame that was received first or selecting the first frame randomly from among the frames corresponding to said sent frame received during a predetermined period or selecting the first frame offering a best reception quality from among the frames corresponding to said sent frame that were received during a predetermined period.

3. Method according to claim 1 or 2, **characterized in that** the second predetermined criterion consists of rejecting each frame in the plurality that is different from the first frame or randomly selecting a predefined quantity of frames from among the frames in the plurality that are different from the first frame, all the other frames in the plurality being rejected, or selecting a predefined quantity of frames offering a best transmission quality from among the frames in the plurality that are different from the first frame, all the other frames in the plurality being rejected.

4. Method according to anyone of claims 1, 2 or 3, **characterized in that** said meter transmits an acknowledgement frame in the direction of the endpoint in order to acknowledge said sent frame when it has been designated by the server for acknowledging each frame sent by said endpoint.

5. Device of the electricity meter type included in a system, referred to as an AMM system, for the automated management of metering from a plurality of electricity meters (120A, 120B, 120C, 120D, 120E), said meters in the plurality of meters being attached to at least one data concentrator (110) via a first powerline network (101), each data concentrator being connected to a server (150) via a second network (102) and serving as a relay between said meters and the server, **characterized in that** said device comprises :
some relay means for relaying, in the direction of the server, a frame received by the device, referred to as first frame, corresponding to a frame in accordance with a communication protocol suited to low power wide area LPWAN networks sent by an endpoint over an LPWAN network, the first frame being selected in accordance with a first predetermined criterion; and
means for rejecting, when a plurality of frames corresponding to said sent frame is received, at least a subset of frames in the plurality that are different from the first frame, each frame in the subset being selected in accordance with a second predetermined criterion.

6. Device according to claim 5, **characterized in that** it further comprises a communication interface (114) with an LPWAN network enabling said meter to receive frames in accordance with a communication protocol suited to LPWAN networks.

7. System, referred to as an AMM system, for automated management of metering from electricity meters, referred to as meters, said system comprising a plurality of meters (120A, 120B 120C, 120D, 120E), at least one data concentrator (110) and a server (150), the meters of the plurality of meters being attached to a data concentrator via a first powerline communication network (101), each data concentrator being connected to the server via a second network (102) and serving as a relay between said meters and the server, **characterized in that** at least one meter of said AMM system is a device according to claim 6, referred to as an LPWAN meter.

8. System according to claim 7, **characterized in that** at least one meter in the AMM system is a device according to claim 5.

9. System according to claim 7 or 8, **characterized in that**, when the AMM system comprises a plurality of LPWAN meters, the server comprises means adapted for determining, for each endpoint communicating with one of said LPWAN meters, which LPWAN meter communicating with said endpoint must acknowledge each frame sent by said endpoint.

10. Computer program, **characterized in that** it comprises instructions for implementing, by a device, the method according to anyone of claims 1 to 4 when said program is executed by a processor of said device.

11. Storage means, **characterized in that** they store a computer program comprising instructions for implementing, by a device, the method according to anyone of claims 1 to 4 when said program is executed by a processor of said device.
